# EUROPÄISCHE PATENTSCHRIFT

(11) **EP 0 650 019 B1**
(45) Veröffentlichungstag und Bekanntmachung des Hinweises auf die Patenterteilung: **28.07.1999**
(21) Anmeldenummer: 94116040.0
(22) Anmeldetag: 12.10.1994
(51) Int. Cl.: F23J 13/02, F16L 58/10, B29C 49/26

(54) **Auskleidung von Schornsteinen**
Liner for chimneys
Revêtement pour cheminées

(30) Priorität: 20.10.1993 DE 9315967 U
(43) Veröffentlichungstag der Anmeldung: 26.04.1995
(73) Patentinhaber: DSM RESINS B.V., 8022 AW Zwolle (NL)
(72) Erfinder: Bültjer, Uwe, Dr., D-67065 Ludwigshafen (DE); Wallner, Hans, D-68259 Mannheim (DE)
(74) Vertreter: den Hartog, Jeroen Hendrikus Joseph

(56) Entgegenhaltungen:
- EP-A- 0 260 688
- EP-A- 0 364 853
- EP-A- 0 442 457
- EP-A- 0 585 837
- DE-A- 3 705 432
- GB-A- 957 213

## Beschreibung

Die Erfindung betrifft eine Auskleidung von Schornsteinen mit einem Kunststoffrohr.

Bei der Verbrennung von üblichen schwefelhaltigen Brennmaterialien in modernen Feuerungsanlagen entstehen stets mehr oder weniger große Mengen hochkonzentrierter Schwefelsäure, die sowohl in gemauerten Haus- oder Fabrikschornsteinen als auch in solchen mit Edelstahlauskleidung zu Korrosion und damit langfristig zur Schädigung des Schornsteins führt. Es besteht daher ein Bedarf nach Sanierung alter, bereits geschädigter Schornsteine sowie nach korrosionsfester Auskleidung neuer Schornsteine.

Nach der DE-A 34 41 375 können Kunststoffrohre, vorzugsweise solche aus thermoplastischen aromatischen Polyethern oder Polythioethern, als Schutzfutter in Schornsteinen von Feuerungsanlagen verwendet werden. Es hat sich aber gezeigt, daß bei längerem Betrieb in derartigen Rohren Risse auftreten. In der EP-A-0 442 457 werden Wärmeformbeständige Rohre oder Liner, wobei die Liner als Innenauskleidung für Schornsteine eingesetzt werden können, beschrieben, die aus einer Kombination von Thermoplasten mit hoher Wärmeformbestandigkeit in Zumindest punktueller Verschweissung mit einem Mantel aus glasfaserverstärkten Thermoplasten oder ungesättigten Duroplasten bestehen. EP-A-0 260 688 beschreibt ein Verfahren zur Herstellung von thermisch stabilen, hochwärmeformbeständigen Formstoffen aus ungesättigen Polyesterharzen, die Cyclopenten oder Cyclohexene-gruppierungen enthalten, durch Härtung in zwei Stufen.

Es wurde nun gefunden, daß solche Probleme nicht auftreten, wenn man Schornsteine mit Rohren aus glasfaserverstärktem, ausgehärtetem Vinylesterharz auskleidet.

Die Auskleidung kann sowohl bei sanierungsbedürftigen Alt-Schornsteinen als auch bei neu errichteten Schornsteinen vorgenommen werden, und zwar bei gemauerten Haus- und Fabrik-Kaminen ebenso wie bei solchen mit Edelstahleinsätzen.

Zur Auskleidung wird ein harzgetränkter Glasfaserschlauch wie ein umgestülpter Strumpf in den Schornstein eingeführt, dort aufgeweitet und dicht an die Kaminwand des Schornsteins angelegt, schließlich wird das Harz ausgehärtet. Der Schlauch kann auch durch die obere Öffnung des Schornsteins in den Kamin eingehängt werden, dort aufgeweitet und dann an die Kaminwand angelegt und gehärtet werden.

Als Ausgangsmaterial für die erfindungsgemäße Auskleidung sind Vinylesterharze (VE-Harze) geeignet.

### VE Harze

Kennzeichnend für diese Klasse von Harzen ist die Gruppe 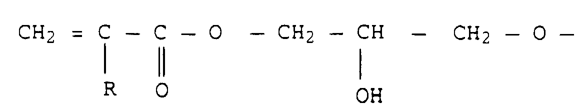 mit R = H oder CH₃.

Unter VE-Harzen, die auch Epoxidacrylate genannt werden, versteht man Umsetzungsprodukte von Polyepoxiden mit ungesättigten Monocarbonsäuren, vorzugsweise mit Methacrylsäure. Diese Harze werden beispielsweise in GB-A 1 006 587 und in den US-PS 3 066 112 und 3 179 623 beschrieben, wobei bevorzugt VE-Harze auf Basis von Bisphenol A zur Anwendung kommen. Sie zeichnen sich durch hohe Zähigkeit und gute Chemikalienbeständigkeit bei begrenzter Wärmeformbeständigkeit aus. Vinylesterharze aus Epoxy-Novolakharzen und (Meth-)Acrylsäure, wie sie beispielsweise in der US-PS 3 256 226 beschrieben werden, weisen dagegen höhere Wärmeformbeständigkeiten, aber geringere Zähigkeiten auf.

Neben üblichen VE-Harzen sind auch carboxylmodifizierte Varianten vorteilhaft einsetzbar. Sie lassen sich leicht durch Umsetzung der Hydroxylgruppen von VE-Harzen mit Dicarbonsäureanhydriden, wie beispielsweise Maleinsäureanhydrid, o-Phthalsäureanhydrid oder Tetrahydrophthalsäureanhydrid, herstellen, wobei unter Ringöffnung Halbesterstrukturen entstehen. Solche VE-Harze sind dann bevorzugt, wenn sie nach der Tränkung eingedickt werden sollen.

Die VE-Harzen werden in einer bevorzugten Ausführungsform in Vinylmonomeren gelöst, wobei üblicherweise 20 bis 100 Gew.-Teile Monomer auf 100 Gew.-Teile Vinylester verwendet werden. Geeignete Vinylmonomere sind z.B. Styrol, Methylstyrol, Chlorstyrol oder Methylmethacrylat. Darüber hinaus können bevorzugt zusätzlich noch Monomere verwendet werden, die erst bei höheren Temperaturen polymerisieren, z.B. Diallylphthalat, trans-Endomethylentetrahydrophthalsäurediethylester oder Endomethylentetrahydrophthalsäuredihydroxyethylester.

Die VE-Harze können die üblichen Zusatzstoffe, wie Füllstoffe, Inhibitoren, Stabilisatoren, Farbstoffe, Pigmente, Eindickmittel und Beschleuniger bzw. Promotoren enthalten.

Bei der Herstellung der Auskleidung wird eine schlauchförmige Glasfasermatte oder ein Glasfasergewebe, welches eine Dicke von etwa 2 bis 5 mm aufweist, und dessen Durchmesser und Länge den Abmessungen des Schornsteins entspricht, mit dem Harz getränkt. Falls das Harz als solches keine ausreichend hohe Viskosität aufweist, wurde ihm bei seiner Präparation ein Eindickmittel, vorzugsweise Magnesium- oder Calciumoxid oder -hydroxid zugesetzt, welches nun, insbesondere bei leichtem Erwärmen, die Eindickung des Harzes unter Viskositätserhöhung bewirkt und dadurch die Form des Schlauches stabilisiert. Das Harz kann auch durch Einrühren eines Thixotropiemittels thixotropiert werden. Der Schlauch wird dann innen und außen mit einer temperaturbeständigen Folie, z. B. aus Polyamid, Polyurethan oder Polyvinylalkohol umhüllt, an seinem unteren Ende verschlossen, wie ein Strumpf umgestülpt und in den Schornstein eingeführt. Dort wird er aufgeweitet und möglichst dicht an die Innenwand des Schornsteins angelegt. Das Aufweiten kann entweder dadurch erfolgen, daß man den Schlauch mit Wasser füllt oder daß man ihm auch an seinem oberen Ende verschließt und dann mit Luft oder Wasserdampf aufbläst. Schließlich kann man auch einen tropfenförmigen Körper, dessen Außendurchmesser dem Innendurchmesser des Schornsteins abzüglich der Dicke des Schlauchs entspricht, durch den Schlauch drückt und diesen dadurch aufweitet. In diesem Fall muß simultan die Härtung durchgeführt werden, da sonst der Schlauch nach dem Durchgang des tropfenförmigen Körpers wieder zusammenfallen würde.

Die Härtung kann entweder thermisch oder durch energiereiche Strahlung erfolgen. Im ersten Fall enthält das Harz Peroxid-Katalysatoren, z. B. ein Kalthärtungs-System Ketonperodid/Kobaltbeschleuniger oder Acylperoxid/Aminbeschleuniger, zusammen mit Radikalbildnern, die bei höherer Temperatur zerfallen, wie tert.-Butylperbenzoat, Dicumylperoxid oder Ditertiärbutylperoxid. Die Härtung erfolgt bei Temperaturen, zwischen 80 und 120°C durch heiße Luft, Wasserdampf oder dadurch, das man das zum Aufweiten in den Schlauch eingefüllte Wasser erhitzt.

Im Fall der Lichthärtung enthält das Harz einen Photoinitiator, z. B. einen Benzoinether, ein Benzilketal oder ein Acylphosphinoxid, vorzugsweise wieder zusammen mit einem bei hohen Temperaturen zerfallenden Radikalbildner. Die Härtung erfolgt mittels UV-Strahlung, wobei geeignete Lampen in den Schornstein abgelassen werden oder in den tropfenförmigen Körper eingebaut bzw. angebaut sein können.

Im Anschluß daran erfolgt vorzugsweise eine Nachhärtung durch mehrstündiges Einblasen von 200 bis 220°C heißer Luft.

## Patentansprüche

1. Auskleidung von Schornsteinen mit einem Kunststoffrohr, dadurch gekennzeichnet, daß das Rohr aus glasfaserverstärktem, ausgehärtetem Vinylesterharz besteht.

2. Verfahren zur Auskleidung von Schornsteinen gekennzeichnet durch folgende Schritte:
a. eine schlauchförmige Glasfasermatte oder ein Glasfasergewebe wird mit einem Vinylesterharz getränkt und dieses gegebenenfalls eingedickt;
b. der Schlauch wird innen und außen mit einer temperaturbeständigen Folie bedeckt;
c. der Schlauch wird in den Schornstein eingeführt;
d. der Schlauch wird aufgeweitet und dabei an die Innenwand des Schornsteins angelegt;
e. das Harz wird ausgehärtet und gegebenenfalls nachgehärtet.

## Claims

1. The lining of chimneys with a plastic tube, characterised in that the tube consists of glass fibre-reinforced, cured vinyl ester resin.

2. Method of lining chimneys characterised by the following steps:
a. a hose-shaped glass fibre mat or a glass fibre cloth is impregnated with a vinyl ester resin and the latter is optionally thickened;
b. the hose is covered internally and externally with a temperature-resistant foil;
c. the hose is introduced into the chimney;
d. the hose is expanded and, in the process, applied to the inner wall of the chimney;
e. the resin is cured and optionally post-cured.

## Revendications

1. Revêtement pour cheminées avec un tuyau de matières plastiques, caractérisé en ce que le tuyau est constitué de résine d'ester de vinyle renforcée avec des fibres de verre, durcie.

2. Procédé pour le revêtement de cheminées caractérisé par les étapes suivantes :
a. imprégner un matelas de fibres de verre en forme de tuyau ou un tissu de fibres de verre avec une résine d'ester de vinyle et de concentrer éventuellement celle-ci;
b. recouvrir le tuyau à l'intérieur et à l'extérieur avec une feuille résistante à la température;
c. introduire le tuyau dans la cheminée;
d. dilater le tuyau et ainsi l'appliquer contre la paroi intérieure de la cheminée;
e. durcir la résine et éventuellement effectuer un post-durcissement.
